# EUROPÄISCHE PATENTANMELDUNG

(11) **EP 0 868 931 A1**
(43) Veröffentlichungstag der Anmeldung: **07.10.1998**
(21) Anmeldenummer: 98106036.1
(22) Anmeldetag: 02.04.1998
(51) Int. Cl.: B01D 11/02

(54) **Vorrichtung zur Extraktion von chemischen Verbindungen**

(30) Priorität: 03.04.1997 DE 19713787
(71) Anmelder: Raupach, Niko, 83527 Haag i. Obb. (DE)
(72) Erfinder: Raupach, Niko, 83527 Haag i. Obb. (DE)

(57) **Zusammenfassung**

Die Erfindung betrifft eine Vorrichtung zur insbesondere superkritischen Extraktion von chemischen Verbindungen, insbesondere aus Boden- und Pflanzenproben, mit mindestens einer unter Druck stehenden Spüleinrichtung (1A-1E), einer der Spüleinrichtung oder den Spüleinrichtungen zugeordneten Heizeinrichtung (40) und gegebenenfalls einem nachgeschalteten Wärmetauscher (17), wobei jede Spüleinrichtung (1A-1E) mindestens eine ein Hochdruckrohr (25) sowie Anschlüsse (26) für Zu- und/oder Ableitungen (4, 12) für organisches Lösungsmittel umfassende Säule aufweist, und in der Zuleitung (4) für organisches Lösungsmittel eine Hochdruckflüssigkeitspumpe (5) und in der Ableitung (12) für organisches Lösungsmittel eine Druckregel - und/oder -steuereinrichtung angeordnet ist. Um auf einfache Weise in kurzer Zeit ein die Verunreinigung enthaltendes Kondensat zu erhalten, wird erfindungsgemäß vorgeschlagen, daß die Heizeinrichtung (40) mindestens zwei aus wärmeleitfähigem Material gefertigte und mindestens eine Säule (25) umgebende Halbschalen (41A, 41B) sowie den Halbschalen (41A, 41B) zugeordnete, gegebenenfalls getrennt voneinander steuer- und/oder regelbare Heizelemente aufweist.

## Beschreibung

Die Erfindung betrifft eine Vorrichtung zur insbesondere superkritischen Extraktion von chemischen Verbindungen, insbesondere aus Boden- und Pflanzenproben, gemäß dem Oberbegriff des Anspruchs 1.

Mit einer solchen Vorrichtung kann beispielsweise ein analytischer Nachweis erbracht werden, ob Pestizide oder Herbizide, wie z.B. das gegen Unkräuter in der Landwirtschaft verwendete, auf den Boden zur Wirkstoffabgabe ausgebrachte, über die Wurzeln aufgenommene und im Boden nur bedingt abbaubare Atrazin oder Triazin und seine Metaboliden, in den Boden- und Pflanzenproben vorhanden sind. Dies ist aus zwei Gründen wichtig: Zum einen, um einen Nachweis führen zu können, inwieweit verbotene Pestizide oder Herbizide noch stets angewendet werden, und zum anderen zur Feststellung einer wirklichen Bodenbelastung und der damit verbundenen Auswaschung der Pestizide und Herbizide in das Grundwasser und der entsprechenden Gefährdung des Menschen. Da die Pestizide und Herbizide Bindungen mit Bodenbestandteilen eingehen, müssen diese zur Analyse wieder mit Hilfe von organischen Lösungsmitteln gelöst werden.

Im Unterschied zur Extraktion, bei der das Herauslösen von bestimmten Bestandteilen aus festen oder flüssigen Substanzgemischen mit Hilfe geeigneter flüssiger organischer Lösungsmittel im unterkritischen Temperatur- und Druckbereich erfolgt, wird bei einer superkritischen Extraktion die Säule der Spüleinrichtung zum Beispiel von Hand mit einer Probe aus beispielsweise staubfeinem Boden- oder Pflanzenmaterial beladen und anschließend organisches Lösungsmittel unter Einhaltung überkritischer Druck- und Temperaturbereiche durch die Spüleinrichtung gepumpt. Das Lösungsmittel befindet sich dabei im superkritischen Bereich, weit über dem Siedepunkt, und hat dadurch eine extrem starke Lösefähigkeit, so daß sich die in der Probe enthaltenen Verunreinigungen in dem organischen Lösungsmittel lösen. Im superkritischen Zustand liegt das Lösungsmittel sowohl in der flüssigen als auch in der gasförmigen Phase vor. Ein solches überkritisches Lösungsmittel hat dann die niedrige Viskosität von Gasen und das Lösungsvermögen einer Flüssigkeit. Nach der Spüleinrichtung kühlt das sich im überkritischen Zustand befindende Lösungsmittel gegebenenfalls im nachgeschalteten Wärmetauscher auf Umgebungstemperatur ab und kondensiert. Das anfallende Kondensat wird aufgefangen und anschließend die Menge der gelösten Bodenverunreinigungen mittels chemischer Analyse bestimmt.

Eine superkritische Extraktion von Pflanzenschutzmittelrückständen ist mit den auf dem Markt erhältlichen superkritischen Extraktoren, die mit CO₂ arbeiten, nicht möglich.

Der Erfindung liegt die Aufgabe zugrunde, eine Vorrichtung der eingangs genannten Art so zu optimieren, daß sie auf einfache Weise in kurzer Zeit ein die Probenverunreinigung, wie z.B. Pflanzenschutzmittelrückstände, enthaltendes Kondensat liefert.

Diese Aufgabe wird erfindungsgemäß mit Hilfe der im Kennzeichen des Anspruchs 1 angegebenen Merkmale erreicht.

Mit der erfindungsgemäßen Anordnung wird ein unmittelbares Anliegen der Halbschalen an der Säule und damit durch direkte Wärmeleitung eine kurze Anheizzeit ermöglicht. Die Verwendung von Druckrohren erlaubt dabei eine einfache und sichere Handhabung des unter Druck stehenden Lösungsmittels.

Um die Vorrichtung automatisch arbeiten lassen zu können, kann jedes Heizelement vorteilhafterweise mit einer Temperatursteuer - und/oder -regeleinrichtung verbunden sein, die zu einer superkritischen Extraktion zweckmäßigerweise so eingestellt ist, daß ein Aufheizen einer Säule auf 200°C bis 300°C, vorzugsweise innerhalb von 2 bis 6 Minuten, möglich ist, wobei die Säulen auf einen Druck von 150 bar bis 250 bar ausgelegt sind, so daß jedes beliebige organische Lösungsmittel im überkritischen Bereich gehalten werden kann. Zur Aufrechterhaltung dieses Druckbereichs ist die in den Ableitungen für organisches Lösungsmittel angeordnete Druckregel - und/oder -steuereinrichtung zur Erhöhung des Bedienungskomforts der Vorrichtung zweckmäßigerweise als Überdruckventil ausgebildet. Dieses Überdruckventil ist dabei den speziellen Anforderungen, die sich aus den Betriebsbedingungen der Vorrichtung ergeben, besonders angepaßt. So sind im Ventil mit Vorteil Viton - O - Ringe als Dichtringe vorgesehen, die ein Anlagern von beim Druckabbau entstehenden Kristallisationen oder von im Kondensat befindlichen Feststoffen verhindern. Weiterhin ist das Ventil mit austauschbaren Federn und einer Stellschraube versehen, die ein stufenloses Einstellen des Öffnungsdruckes ermöglichen. Dies ist wichtig, da der Systemdruck unabhängig von der Durchflußmenge aufrecht erhalten werden muß, die insbesondere in der Anheizphase der Vorrichtung beim Erreichen des überkritischen Zustandes Schwankungen unterliegt. Die austauschbaren Federn erlauben es, einen gewünschten Öffnungsdruck von etwa 3,4 bis 414 bar ohne Austausch des Ventilkörpers einzustellen.

Desweiteren kann zur Vereinfachung der Bedienung ein Druckablaßventil vor dem Überdruckventil in der Ableitung für organisches Lösungsmittel angeordnet sein. Mit einem solchen Druckablaßventil kann vor dem Herausnehmen der Säulen aus der Spüleinrichtung der Druck manuell abgelassen werden.

Zur Erhöhung der Sicherheit ist es weiterhin vorteilhaft, die Anschlüsse für die Zu- und/oder Ableitungen für organisches Lösungsmittel mit Inertgas zu spülen, da bei einem eventuellen Entweichen des Lösungsmittels aus den Säulen das Inertgas das Lösungsmittel soweit verdünnt, daß eine Entzündungsgefahr gebannt ist. Dies ist besonders von Vorteil, wenn die Zuleitungen für organisches Lösungsmittel, wie vorgesehen, mit einer Quelle für Methanol in Verbindung stehen. Methanol hat die Eigenschaft sogar kovalente Bindungen zu lösen. Das Methanol wird dabei mit einem Durchsatz von 75ml/h durch die Säule geleitet. Außer Methanol kann aber auch Hexan, Aceton, CO₂, Ethylen, Propan, Ammoniak, Stickstoff, Argon oder Distickstoffoxid als organisches Lösungsmittel verwendet werden.

Wird Methanol als Lösungsmittel verwendet, ist auf eine geeignete Materialwahl, wie z.B. korrosionsbeständigen Stahl, für die mit dem Methanol in Berührung kommenden Teile zu achten.

Als Inertgas kann besonders vorteilhaft gasförmiger Stickstoff zum Einsatz kommen, da er kostengünstig zur Verfügung gestellt werden kann.

Als Heizelemente in den der direkten Wärmeleitung dienenden Halbschalen können stabförmige, elektrische Heizpatronen vorgesehen werden, die in Längsbohrungen der Halbschalen eingesetzt sind und die ein relativ kostengünstiges Serienprodukt darstellen. Diese Heizpatronen gibt es in den unterschiedlichsten Abmessungen, Leistungsstärken und Ausführungen. Der Durchmesser der als Rohre ausgebildeten Säulen und der der Heizpatronen beispielsweise bei zwei Heizpatronen pro Halbschale sollte relativ klein gewählt werden, um die Dimensionen der Halbschalen nicht unnötig zu vergrößern. Denn je größer die Halbschalen und deren Gewicht sind, desto größer muß die Leistung der Heizung in der Anheizphase sein.

Zur einfachen Steuerung und/oder Regelung der Vorrichtung kann den Halbschalen mindestens ein Temperaturfühler zugeordnet sein, der elektrisch mit der Temperatursteuer - und/oder -regelungseinrichtung verbunden ist. Der Temperaturfühler ist dabei zweckmäßigerweise in einer die entsprechende Halbschale quer durchsetzenden Bohrung angeordnet.

Zur Erhöhung der Wärmeleitfähigkeit und aus Fertigungsgsgründen können die Halbschalen vorteilhafterweise aus im Querschnitt rechteckigen Blöcken aus Aluminium gefertigt sein. Diesen Blöcken sind Scharniere und ein Verschlußmechanismus derart zugeordnet, daß die Halbschalen im geschlossenen Zustand des Verschlußmechanismus am Hochdruckrohr jeder Säule angepreßt sind. Anstelle von Scharnieren mit Verschlußmechanismus sind aber auch beispielsweise Spannschrauben zum Anpressen der Halbschalen an die Hochdruckrohre geeignet.

Zur Aufnahme der Säule in den Halbschalen kann entlang der Längsseite eines jeden eine Halbschale bildenden Aluminiumblockes beispielsweise mittels eines Fräsvorganges eine halbrunde Aussparung angebracht sein, deren Radiusmittelpunkt außerhalb des Blockes liegt. Auf diese Art und Weise entsteht im zusammengeklappten Zustand der beiden Halbschalen bei geschlossenem Verschlußmechanismus ein Spalt zwischen den Halbschalen. Dieser Spalt vermeidet eine Doppelpassung zwischen einer Säule und den beiden Halbschalen und gewährleistet ein exaktes Anliegen der Flächen der halbrunden Aussparungen an der Säule. Jeweils an beiden Enden ist die Aussparung so erweitert, daß die Anschlüsse für die Zu- und Ableitungen für organisches Lösungsmittel Platz finden.

Im Querschnitt gesehen rechts und links hinter der Aussparung für die Säule können symmetrisch auf einem Halbkreis, beispielsweise zwei Längsbohrungen, liegen, die zur Aufnahme der Heizpatronen längs durch die Halbschale verlaufen. Die Heizpatronen sind dabei mit Hilfe einer Wärmeleitpaste in die Bohrungen eingesetzt, um ein etwaiges lokales Überhitzen der Heizpatronen aufgrund eines außerhalb der Einbautoleranz für Heizpatronen liegenden Bohrungsdurchmessers zu vermeiden. Bei der Fertigung von langen Bohrungen besteht die Möglichkeit, daß der Bohrer in Schwingungen gerät, und das Bohrloch über das gewünschte Maß so weit aufweitet, daß diese Aufweitungen durch ein anschließendes Reiben mit einer Reibale nicht mehr geglättet werden können. Die Wärmeleitpaste hilft auch unterschiedliche Wärmeausdehnungen zwischen den für die Heizpatronen und den Halbschalen gewählten Materialien zu überbrücken.

An der Rückseite mindestens einer Halbschale kann vorteilhafterweise eine Längsnut vorgesehen sein. In diese Längsnut ist die Zuleitung für das organische Lösungsmittel eingesetzt. Dadurch kann das Lösungsmittel bereits vor dem Eintritt in die Säule vorgeheizt werden.

Weiterhin können die Halbschalen mit Vorteil Bohrungen für Inertgas aufweisen, die mit den Inertgaszuleitungen in Verbindung stehen. Diese Bohrungen münden im Bereich der Anschlüsse der Zu- und/oder Ableitungen für organisches Lösungsmittel an der Säule. Damit ist ein Umspülen dieser Anschlüsse mit Inertgas gewährleistet, so daß eventuell an den Anschlüssen austretendes Lösungsmittel sich nicht mit Luftsauerstoff vermischen und bei den hohen Betriebstemperaturen entzünden kann. Das Inertgas verdrängt die Umgebungsluft, verdünnt das eventuell austretende Lösungsmittel und tritt zusammen mit ihm als nicht brennbares Gasgemisch in die Umgebung aus. Um Leckagen mit einem Detektor aufspüren zu können, können in den Halbschalen außer den Bohrungen für das Inertgas auch Bohrungen zur Aufnahme eines Lösungsmitteldetektors vorgesehen sein, die ebenso im Bereich der Anschlüsse der Zu- und/oder Ableitungen für das Lösungsmittel enden. Mit Hilfe dieser Detektoren kann im Notfall ein Abschalten der Lösungsmittelzufuhr und der Heizeinrichtung bewirkt werden.

Die beiden Halbschalen können vorzugsweise je in einem Gehäuse angeordnet sein, das aus Korrosionsschutzgründen vorzugsweise aus Edelstahl besteht, und das beispielsweise mit Steinwolle isoliert ist. Diese Gehäuse sind so verbunden, daß zwischen den Gehäusen ein Spalt von ungefähr 1 bis 2 mm entsteht, um auch hier eine Doppelpassung zu vermeiden. An der Rückseite der Gehäuse befinden sich Gummipuffer, die ein flexibles Befestigen des Gehäuses erlauben. Die Isolierung hilft Wärmeverluste zu vermeiden und ist aus Sicherheitsgründen notwendig, um Verbrennungen beim unachtsamen Berühren der Oberflächen oder beim unachtsamen Arbeiten mit der Vorrichtung auszuschließen. Sind die Gehäuse vorhanden, sind die den Halbschalen zugeordneten Scharniere und der entsprechende Verschlußmechanismus an den Gehäusen befestigt.

Zum gleichzeitigen Fixieren und druckdichten Anschließen der Säule kann vorteilhafterweise eine Klemmeinrichtung vorhanden sein, in die eine oder mehrere Säulen einspannbar sind.

Dabei können die Anschlüsse für die Zu- und/oder Ableitungen für organisches Lösungsmittel an den Enden jeder Säule angebrachte Rohrverschlußelemente aufweisen, wobei jedes Rohrverschlußelement eine Durchgangsbohrung, die mit der Zu- oder Ableitung für organisches Lösungsmittel in Verbindung steht, besitzt. Diese Rohrverschlußelemente sind in die die Säule tragende Klemmeinrichtung einspannbar.

Um das Anbringen von Verschraubungsgewinden an den Rohrenden der Säule zu vermeiden, können die Rohrverschlußelemente mit Vorteil über Klemmringe mit dem Rohr der Säule verbunden sein. Damit ist eine einfache und schnelle Montage der Rohrverschlußelemente ohne Gewindeschneiden gegeben.

Die Klemmeinrichtung weist vorzugsweise eine beispielsweise als Vierkantrohr ausgebildete Stütze auf, der sowohl eine untere Konsole als auch ein Andruckelement derart zugeordnet ist, daß eine Säule zwischen unterer Konsole und Andruckelement einspannbar ist. Wird ein Vierkantrohr als Stütze verwendet, sollte insbesondere bei superkritischer Extraktion die Wandstärke des Vierkantrohres so ausgelegt sein, daß bei einer für eine leckagefreie Verbindung notwendige Andrückkraft des Andruckelements keine oder nur eine sehr geringe Aufbiegung des Vierkantrohres erfolgt

Zum Einspannen einer Säule zwischen unterer Konsole und Andruckelement kann dieses einen auf einen Stutzen einwirkenden und beispielsweise als Schubstangenspanner ausgebildeten Kniehebelmechanismus aufweisen. In dem Stutzen und in der unteren Konsole sind Bohrungen angebracht, an die einerseits die Zu- und/ oder Ableitungen für organisches Lösungsmittel und andererseits druckstabile Leitungen angeschlossen sind, die ihrerseits in an den Durchgangsbohrungen der Rohrverschlußelemente vorgesehenen, gegebenenfalls Dichtelemente, z.B. O-Ringe, aufweisenden Konen eingreifen. Damit ist es auf einfache Weise möglich, die Säulen ohne Verwendung von Verschraubungen druckdicht und leckagefrei in das Leitungssystem einer Extraktionsvorrichtung zu integrieren. Ein Schubstangenspanner läßt sich deshalb mit Vorteil anwenden, da bei einem Schubstangenspanner die halbkreisförmige Bahn eines Hebelarms mittels eines Spannhebels in eine Längsbewegung einer Schubstange umgesetzt wird. Sobald die Schubstange ihre äußerste Stellung erreicht hat, hat der Spannhebel um ein bestimmtes Maß seinen Hebeltotpunkt überschritten und ist verriegelt, was ein äußerst sicheres Festhalten der Säule in der Klemmeinrichtung ermöglicht. Der Schubstangenspanner kann an einer an der Stütze angeschweißten Spannerkonsole angeschraubt sein.

Mit Vorteil kann der Kniehebelmechanismus mit einer auf den Stutzen einwirkenden Andrückschraube versehen sein, wobei der Andrückschraube ein Tellerfederpaket zur Längenänderungskompensation der Säule zugeordnet ist. Da eine Säule einerseits den für die Extraktion notwendigen Temperaturen ausgesetzt ist und andererseits auch Herstellungstoleranzen unterliegt, lassen sich mit dieser Andrückschraube Längentoleranzen ausgleichen. Die Tellerfederpackung sorgt dabei dafür, daß auch eine geringe Längentoleranz möglich ist, ohne daß die Andrückschraube verstellt werden muß.

Zum Erleichtern des Einspannens der Säule in die Klemmeinrichtung kann der Stutzen des Andruckelements in einer an der Stütze über eine obere Konsole befestigten Führungshülse geführt und über eine Feder abgestützt sein. Die Führungshülse ist dabei mit einem solchen Abstand von der unteren Konsole an der Stütze befestigt, daß bei offenem Kniehebelmechanismus eine Säule zwischen Stutzen und Konsole eingesetzt werden kann.

Die an die Bohrungen der unteren Konsole und des Stutzens angeschlossenen Zu- und/oder Ableitungen für organisches Lösungsmittel können vorzugsweise als Kapillarleitungen oder als Leitungen mit einem, im Vergleich zur den Säulen, kleinen Durchmesser ausgebildet sein. Damit wird ein unnötig hoher Lösungsmittelverlust beim Auswechseln einer Säule vermieden, da dann aufgrund des kleinen Leitungsdurchmessers nur wenig Lösungsmittel in den Zu- und/oder Ableitungen verbleibt. Außerdem sind solche Kapillarleitungen sehr flexibel, was ihre Handhabung erleichtert.

Im folgenden wird die Erfindung anhand eines vorteilhaften Ausführungsbeispiels zur superkritischen Extraktion beschrieben. Eine solche Vorrichtung kann beispielsweise besonders vorteilhaft für die superkritische Extraktion des Herbizides Atrazin verwendet werden. Bei der superkritischen Extraktion kommt es zu einer chemischen Modifikation der Atrazinmoleküle, die an die Bodenpartikel chemisch gebunden sind. Die in der Vorrichtung zu erreichenden hohen Temperaturen ermöglichen es den Methanolmolekülen, die Bindungen zwischen Atrazin und Huminstoffen zu lösen; es tritt eine sogenannte Methanolyse ein. Atraton entsteht durch Austausch der Halogene gegen eine Methoxygruppe. Im Konzentrat werden dann Atratone nachgewiesen und von der Menge der Atratonmoleküle kann auf die Menge des Atrazins rückgeschlossen werden. Während der Anheizphase ist die Temperatur für die vorstehenden Reaktionen jedoch zu gering und es kommt nicht zu einer superkritischen Extraktion, sondern nur zu einer Extraktion. Atrazin und seine Metaboliden werden dabei ohne Umwandlung in Atratone aus der Bodenmatrix eluiert. Diese Extraktionsprodukte aus der Anheizphase werden bei der Atratonanalyse nicht erfaßt. Daraus resultiert, daß die Zeitspanne für die Anheizphase möglichst kurz sein muß, um eine möglichst vollständige Atratonausbeute zu erhalten. Bei einer längeren Anheizphase müßte das Kondensat sowohl auf Triazine, als auch auf Atratone untersucht werden, was mit einem unnötigen zusätzlichen Arbeitsaufwand verbunden ist. Das nachstehend in allen Einzelheiten beschriebene Ausführungsbeispiel der erfindungsgemäßen Vorrichtung erlaubt die Einhaltung sehr kurzer Anheizphasen.

Die Vorrichtung kann in verschiedenen Abmessungen gebaut werden, so daß sie nicht nur als Laboranlage, sondern auch zur industriellen Anwendung geeignet ist.

Abgesehen von der superkritischen Extraktion kann eine erfindungsgemäße Vorrichtung aber auch unter Anpassung der Temperatur- und Druckverhältnisse für eine Extraktion unter unterkritischen Temperatur- und Druckverhältnissen herangezogen werden.

Es zeigen:
Figur 1 eine Methanolextraktionsanlage mit einer mehrere hintereinander geschaltete Säulen aufweisenden Spüleinrichtung;
Figur 2A eine als Hochdruckrohr ausgebildete Säule mit ihren Rohrverschlußelementen;
Figur 2B ein Rohrverschlußelement;
Figur 3 eine in einer Klemmeinrichtung eingespannte und zwischen Halbschalen angeordnete Säule; und
Figur 4 einen Querschnitt durch eine eingespannte und zwischen Halbschalen angeordnete Säule.

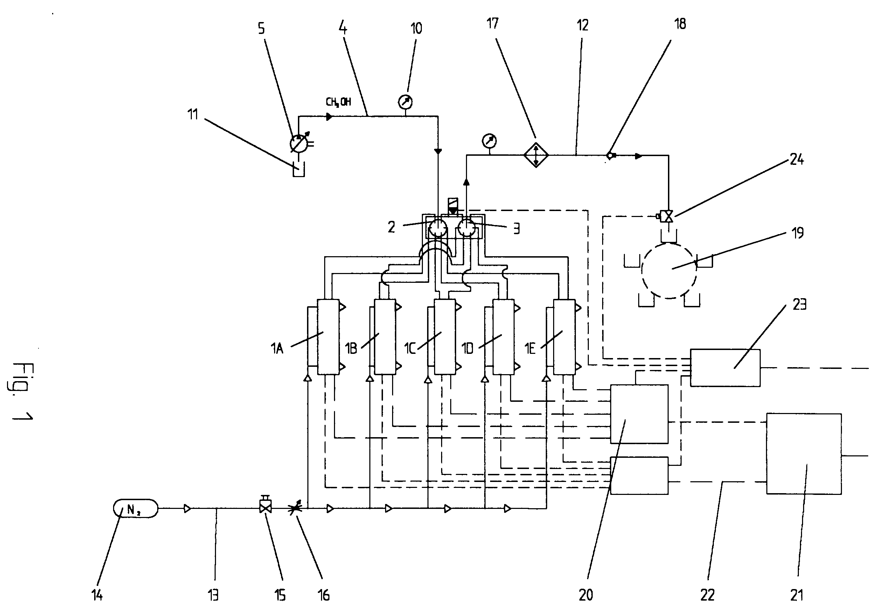

Wie aus Figur 1 ersichtlich ist, sind in dem dargestellten Beispiel insgesamt fünf, je in einer Heizeinrichtung angeordnete Säulen 1A bis 1E zu einer Spüleinrichtung nebeneinandergeschaltet, wobei die einzelnen Säulen 1A bis 1E über je ein beispielsweise elektrisch oder mittels Druckluft schaltbares Sechswegeventil 2, 3 mit einer Zuleitung 4 für organisches Lösungsmittel und eine Ableitung 12 für organisches Lösungsmittel in Verbindung stehen. Weiterhin ist eine Zuleitung 13 für Inertgas über entsprechende Zweigleitungen an jede Säule 1A bis 1E angeschlossen. Die Zuleitung 4 für organisches Lösungsmittel steht dabei vorzugsweise mit einer Quelle 11 für Methanol und die Zuleitung 13 für Inertgas vorzugsweise mit einer Quelle 14 für gasförmigen Stickstoff in Verbindung.

In der Zuleitung 4 für das organische Lösungsmittel ist eine Hochdruckflüssigkeitspumpe 5, die für die Zuführung des organischen Lösungsmittels mit einem Druck von 150 bar bis 250 bar sorgt, sowie ein Druckmanometer 10 angeordnet. In der Zuleitung 13 für gasförmigen Stickstoff ist ein Absperrventil 15 sowie eine Drossel 16 vorgesehen. In der Ableitung 12 für organisches Lösungsmittel ist gegebenenfalls ein Wärmetauscher 17 und ein der Druckregelung dienendes Überdruckventil 18 angeordnet. Im Wärmetauscher 17 wird das in den Säulen auf überkritische Temperaturen aufgeheizte und die Bodenprobe gelöst enthaltende organische Lösungsmittel zweckmäßigerweise mit Wasser auf Umgebungstemperatur abgekühlt. Das dabei anfallende Kondensat wird zur späteren chemischen Analyse in einem dem Wärmetauscher nachgeschalteten Probenteller 19 aufgefangen.

In einem nicht dargestellten Ausführungsbeispiel kann statt eines Probentellers und einer Ableitung mit Sechswegeventil für jede Säule ein Überdruckventil und eine Probenauffangeinrichtung vorhanden sein. In beiden Fällen kann ein Druckablaßventil in der, beziehungsweise den Ableitungen vor dem Überdruckventil angeordnet sein, um vor dem Entnehmen der Säule aus der Spüleinrichtung den Druck im Leitungssystem abzubauen.

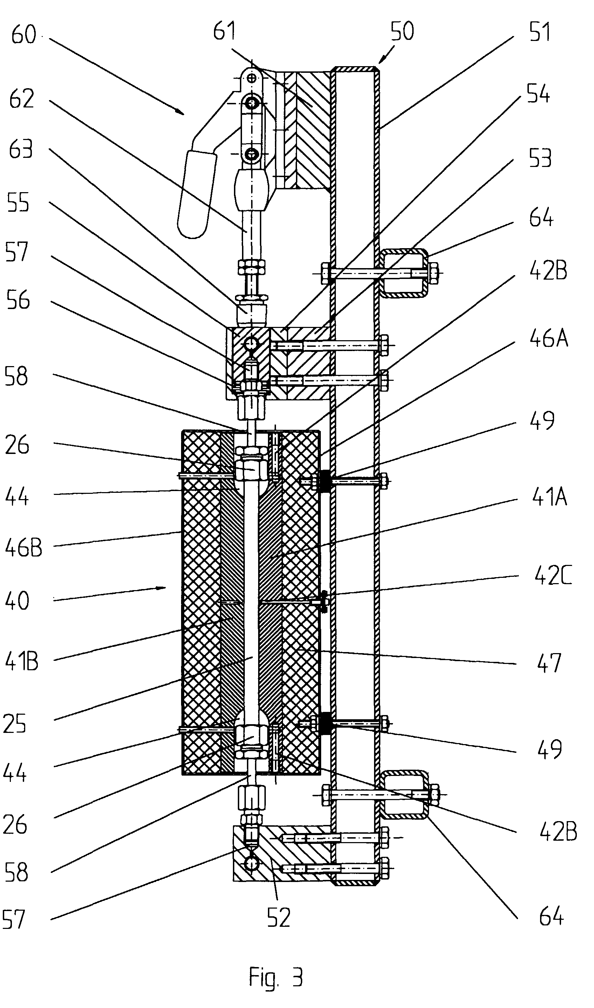

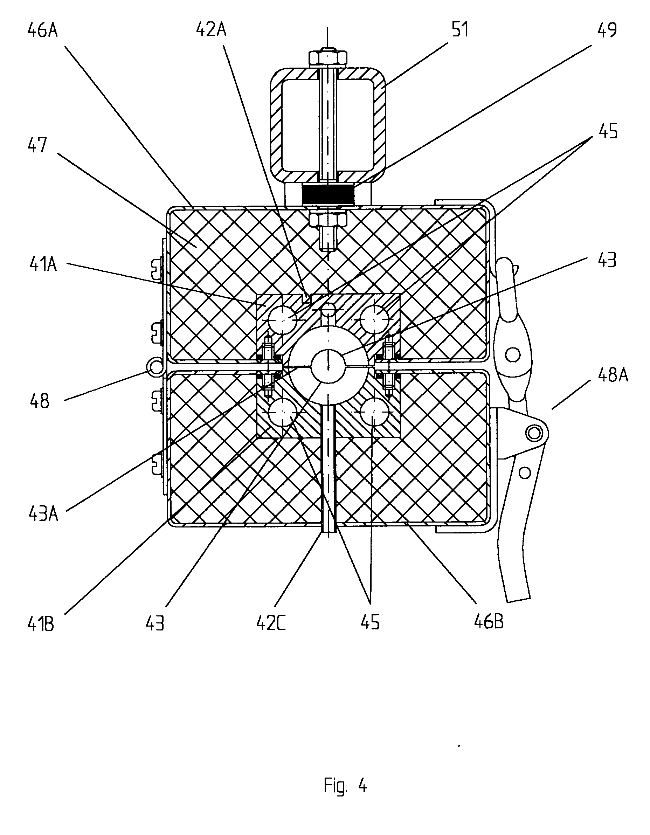

Zur Erreichung einer überkritischen Temperatur sind entweder die einzelnen Säulen jeweils in einer vorzugsweise mit elektrisch betriebenen Heizpatronen bestückten und aus zwei Halbschalen gebildeten Heizeinrichtung (siehe Figuren 3 und 4) angeordnet, oder mehrere Säulen sind in einer entsprechende Heizpatronen aufweisenden Heizeinrichtung angeordnet. Die Heizpatronen stehen über eine Thyristorschaltung 20 mit einer Temperatursteuer - und/oder -regelungseinrichtung 21 in Verbindung, die ihrerseits wieder über elektrische Steuerleitungen 22 Signale von in den Halbschalen angeordneten Temperaturfühlern erhält. Ein in der Temperatursteuer - und/oder -regelungseinrichtung 21 vorhandener Mikroprozessor vergleicht die gemessenen Temperaturwerte mit vorgegebenen Temperaturwerten, woraufhin gegebenenfalls die Heizeinrichtung über die Thyristorschaltung 20 aktiviert wird. Auf einfache Weise läßt sich somit die Temperatur in den Säulen auf den für die superkritische Extraktion erforderlichen Werten von 200° bis 300° C konstant halten.

Zusätzlich kann die Temperatursteuer - und/oder -regelungseinrichtung 21 auch mit einer Zeitschaltung 23 verbunden sein, an die über entsprechende Steuerleitungen die Dreiwegeventile 2, 3 in den Zu- und Ableitungen 4, 12 für organisches Lösungsmittel, ein dem Probenteller 19 vorgeschaltetes und nur während dessen Umschaltung geschlossenes Absperrventil 24 in der Ableitung 12 für organisches Lösungsmittel sowie die Thyristorschaltung 20 angeschlossen sind. Nach Erreichen einer für die Lösung der Bodenproben in dem organischen Lösungsmittel ausreichenden Zeitspanne kann dann die Heizeinrichtung abgeschaltet und die Dreiwegeventile 2, 3 umgeschaltet werden.

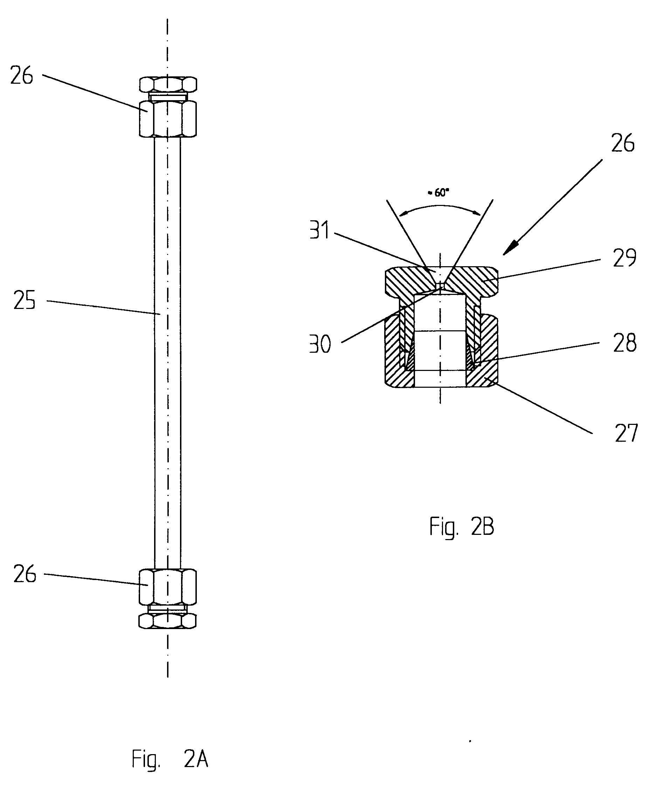

Die in den Figuren 2A und 2B dargestellte Säule ist als Hochdruckrohr 25 ausgebildet. Das Hochdruckrohr 25 ist aus Edelstahl gefertigt und weist beispielsweise einen Innendurchmesser von etwa 10mm auf. An beiden Enden des Hochdruckrohres 25 befinden sich Rohrverschlußelemente 26. Wie in Figur 2B zu sehen ist, bestehen diese aus auf die Rohre aufgeschobenen, an der Außenseite mit einem Sechskant versehenen Hülsen 27, aus in die Hülsen 27 eingeschraubten, ebenso einen Außensechskant aufweisenden Abschlußelementen 29 sowie aus zwischen den Hülsen 27 und den Abschlußelementen 29 eingesetzten, Schrägschultern aufweisenden Klemmringen 28. Die Abschlußelemente 29 weisen zu den Schrägschultern der Klemmringe 28 kongruierende Schrägschultern auf, so daß beim Einschrauben der Abschlußelemente 29 in die Hülsen 27 die Klemmringe 28 gegen die Außenoberfläche der Hochdruckrohre 25 gepreßt werden. In den Abschlußelementen 29 befinden sich Durchgangsbohrungen 30, die nach außen hin in einem Konus 31 enden.

In Figur 3 ist eine solche Säule 25 mit Hilfe einer die Säule 25 tragenden Klemmeinrichtung 50 in einer Heizeinrichtung 40 eingespannt, wobei die Heizeinrichtung 40 ihrerseits ebenso an der Klemmeinrichtung 50 befestigt ist. Die Klemmeinrichtung weist eine beispielsweise als Vierkantrohr ausgebildete Stütze 51 auf, an die eine untere Konsole 52 und eine obere Konsole 53 angeschraubt sind. Die obere Konsole 53 ist mit einer Führungshülse 54 versehen, in der ein Stutzen 55 längsverschieblich geführt und über eine Feder 56 abgestützt ist. Sowohl die untere Konsole 52 als auch der Stutzen 55 sind derart mit Bohrungen 57 versehen, daß sich die Bohrungsöffnungen der unteren Konsole 52 und des Stutzens 55 genau gegenüberstehen. In diese Bohrungsöffnungen sind druckstabile Leitungen 58 eingeschraubt, die an ihren anderen Enden konisch zulaufen und mit den Konen 31 der Rohrverschlußelemente 26 der Säulen 25 gegebenenfalls über Dichtungselemente, wie zum Beispiel O-Ring, in Eingriff bringbar sind. An die Bohrung 57 der unteren Konsole 52 ist außerdem die Zuleitung 4 für organisches Lösungsmittel und an die Bohrung 57 des Stutzens 55 die Ableitung 12 für organisches Lösungsmittel angeschlossen.

Zur Längsverschiebung des Stutzens 55 ist ein als Schubstangenspanner ausgebildeter Kniehebelmechanismus 60 vorgesehen, der an einer an dem Vierkantrohr 51 beispielsweise angeschweißten Spannerkonsole 61 befestigt ist. Eine Schubstange 62 des Kniehebelmechanismus 60 ist mit einer auf den in der oberen Konsole 53 geführten Stutzen 55 einwirkenden Andrückschraube 63 versehen, der außerdem ein Tellerfederpaket zur Längenänderungskompensation einer Säule 25 zugeordnet sein kann. Der Abstand zwischen Spannerkonsole 61 und oberer Konsole 53 einerseits sowie oberer Konsole 53 und unterer Konsole 52 andererseits ist dabei so gewählt, daß bei geschlossenem Kniehebelmechanismus 60 eine mit ihren Konen 31 der Rohrverschlußelemente 26 zwischen die konisch zulaufenden druckstabilen Leitungen 58 eingesetzte Säule 25 auch bei den für die superkritische Extraktion notwendigen Drücken fest und leckagefrei eingespannt ist.

Wie aus Figur 3 weiterhin zu entnehmen ist, ist an dem Vierkantrohr 51 in der Höhe der eingespannten Säule 25 eine Heizeinrichtung 40 befestigt. Diese Heizeinrichtung 40, die im folgenden anhand der Figuren 3 und 4 beschrieben wird, weist zwei aus wärmeleitfähigem Material gefertigte und die Säule 25 umgebende Halbschalen 41A und 41B sowie den Halbschalen zugeordnete, gegebenenfalls getrennt voneinander steuer- und /oder regelbare Heizelemente auf. Zur Erhöhung der Wärmeleitfähigkeit und aus Fertigungsgründen sind die Halbschalen 41A und 41B vorteilhafterweise aus im Querschnitt rechteckigen Blöcken aus Aluminium gefertigt. Die Länge dieser Blöcke ist größer als die Länge der Säule 25, damit diese während der superkritischen Extraktion in einem homogenen Wärmefeld liegt. Zur Aufnahme der Säule 25 in den Halbschalen 41A, 41B ist entlang der Längsseite eines jeden eine Halbschale bildenden Aluminiumblockes beispielsweise mittels eines Fräsvorganges eine halbrunde Aussparung 43 (siehe Figur 4) mit einem Radius von etwa 12 mm angebracht, deren Radiusmittelpunkt etwa 0,25 mm außerhalb des Blockes liegt. Auf diese Art und Weise entsteht im zusammengeklappten Zustand der beiden Halbschalen 41A, 41B ein Spalt 43A von etwa 0,5mm zwischen den Halbschalen. Dieser Spalt 43A vermeidet eine Doppelpassung zwischen einer Säule 25 und den beiden Halbschalen 41A, 41B und gewährleistet ein exaktes Anliegen der Flächen der halbrunden Aussparungen 43 an der Säule 25. Jeweils an beiden Enden weisen die Aussparungen 43 Erweiterungen 44 auf (siehe Figur 3), in denen die Rohrverschlußelemente 26 der Säule 25 Platz finden. Im Querschnitt gesehen rechts und links hinter der Aussparung 43 für die Säule 25 liegen symmetrisch auf einem Halbkreis beispielsweise zwei Längsbohrungen 45, die zur Aufnahme von Heizpatronen längs durch die Halbschalen 41A, 41B verlaufen.

Die beiden Halbschalen 41A, 41B sind vorzugsweise je in einem Gehäuse 46A, 46B angeordnet, das aus Korrosionsschutzgründen vorzugsweise aus Edelstahl gefertigt ist und das eine beispielsweise aus Steinwolle, Glaswolle oder Keramik bestehende Isolierung 47 aufweist. Diese Gehäuse 46A, 46B sind über Scharniere 48 und einen beispielsweise ebenso als Kniehebelmechanismus ausgebildeten Verschlußmechanismus 48A oder über Spannschrauben so verbunden, daß im geschlossenen Zustand zwischen den Gehäusen ein Spalt von ungefähr 1 bis 2 mm entsteht, um auch hier eine Doppelpassung zu vermeiden. An der Rückseite eines der Gehäuse 46A befinden sich Gummipuffer 49, die ein flexibles Befestigen dieses Gehäuses an dem Vierkantrohr 51 der Klemmeinrichtung 50 erlauben. Die Isolierung 47 hilft Wärmeverluste zu vermeiden und ist aus Sicherheitsgründen notwendig, um Verbrennungen beim unachtsamen Berühren der Oberflächen oder beim unachtsamen Arbeiten mit der Vorrichtung auszuschließen.

An der Rückseite mindestens einer Halbschale 41A ist vorteilhafterweise eine Längsnut 42A vorgesehen. In diese Längsnut 42A kann die Zuleitung für das organische Lösungsmittel eingesetzt werden. Dadurch kann das Lösungsmittel bereits vor dem Eintritt in die Säule vorgeheizt werden.

Weiterhin weisen die Halbschalen mit Vorteil Bohrungen 42B für Inertgas auf (Figur 3), die mit den Inertgaszuleitungen 13 in Verbindung stehen. Diese Bohrungen münden in die Erweiterungen 44 der Aussparungen 43 im Bereich der Rohrverschlußelemente 26 der Säule 25. Damit ist ein Umspülen der Rohrverschlußelemente 26 und der Verbindungen zu den druckstabilen Leitungen 58 mit Inertgas gewährleistet, so daß eventuell an den Anschlüssen austretendes Lösungsmittel sich nicht mit Luftsauerstoff vermischen und bei den hohen Betriebstemperaturen entzünden kann.

Quer zur Längsachse der Halbschalen sind außerdem die Halbschalen zu den halbrunden Aussparungen 43 bzw. deren Erweiterungen 44 durchsetzende Bohrungen 42C vorgesehen, in denen Temperaturfühler und eventuell Lösungsmitteldetektoren angeordnet sind.

Die Stütze 51 der Klemmeinrichtung 50 kann an Querträgern 64 befestigt sein (siehe Figur 3), über die mehrere Klemmeinrichtungen 50 nebeneinander angeordnet werden können. Auf einfache Weise kann somit eine beliebige Anzahl von in Heizeinrichtungen eingesetzten Säulen nebeneinander geschaltet werden.

## Patentansprüche

1. Vorrichtung zur insbesondere superkritischen Extraktion von chemischen Verbindungen, insbesondere aus Boden- und Pflanzenproben, mit mindestens einer unter Druck stehenden Spüleinrichtung (1A-1E), einer der Spüleinrichtung oder den Spüleinrichtungen zugeordneten Heizeinrichtung (40) und gegebenenfalls einem nachgeschalteten Wärmetauscher (17), wobei jede Spüleinrichtung (1A-1E) mindestens eine ein Druckrohr (25) sowie Anschlüsse (26) für Zu- und/oder Ableitungen (4, 12) für organisches Lösungsmittel umfassende Säule aufweist, und in der Zuleitung (4) für organisches Lösungsmittel eine Druckflüssigkeitspumpe (5) und in der Ableitung (12) für organisches Lösungsmittel eine Druckregel - und/oder -steuereinrichtung angeordnet ist, dadurch gekennzeichnet, daß die Heizeinrichtung (40) mindestens zwei aus wärmeleitfähigem Material gefertigte und mindestens eine Säule (25) umgebende Halbschalen (41A, 41B) sowie den Halbschalen (41A, 41B) zugeordnete, gegebenenfalls getrennt voneinander steuer- und/oder regelbare Heizelemente aufweist.

2. Vorrichtung nach Anspruch 1, dadurch gekennzeichnet, daß eine Temperatursteuer - und/oder -regeleinrichtung (21) vorgesehen ist, die ein Aufheizen einer Säule (25) auf 200°C bis 300°C, zweckmäßigerweise innerhalb von 2 bis 6 min, zuläßt und daß die Säulen (25) auf einen Druck von 150 bar bis 250 bar ausgelegt sind.

3. Vorrichtung nach Anspruch 1 oder 2, dadurch gekennzeichnet, daß die Zuleitung (4) für organisches Lösungsmittel mit einer Quelle (11) für Methanol in Verbindung steht.

4. Vorrichtung nach einem der Ansprüche 1 bis 3, dadurch gekennzeichnet, daß den Anschlüssen (26) der Zu- und/oder Ableitungen (4, 12) für organisches Lösungsmittel Inertgaszuleitungen (13) zur Umspülung der Anschlüsse (26) der Zu- und/oder Ableitungen (4, 12) für organisches Lösungsmittel mit Inertgas zugeordnet sind.

5. Vorrichtung nach einem der Ansprüche 1 bis 4, dadurch gekennzeichnet, daß die Druckregeleinrichtung als Überdruckventil (18) ausgebildet ist.

6. Vorrichtung nach einem der Ansprüche 2 bis 5, dadurch gekennzeichnet, daß den Halbschalen (41A, 41B) mindestens ein Temperaturfühler zugeordnet ist, und der Temperaturfühler über elektrische Steuerleitungen (22) mit der mit der Heizeinrichtung (40) in Verbindung stehenden Temperatursteuer - und/oder -regeleinrichtung (21) verbunden ist.

7. Vorrichtung nach einem der Ansprüche 1 bis 6, dadurch gekennzeichnet, daß den Halbschalen (41A, 41B) Scharniere (48) und ein Verschlußmechanismus (48A) derart zugeordnet sind, daß im geschlossenen Zustand des Verschlußmechanismus (48A) die Halbschalen (41A, 41B) am Rohr jeder Säule (25) anliegen., wobei die Halbschalen (41A, 41B) derart ausgebildet sind, daß im geschlossenen Zustand des Verschlußmechanismus (48A) ein Spalt (43A) zwischen den Halbschalen (41A, 41B) vorhanden ist.

8. Vorrichtung nach einem der Ansprüche 4 bis 7, dadurch gekennzeichnet, daß die Halbschalen (41A, 41B) Bohrungen (42B) für Inertgas aufweisen, die Bohrungen (42B) mit den Inertgaszuleitungen (13) in Verbindung stehen, und die Bohrungen (42B) im Bereich der Anschlüsse (26) der Zu- und/oder Ableitungen (4, 12) für organisches Lösungsmittel der Säule (25) münden.

9. Vorrichtung nach Anspruch 1 bis 8, dadurch gekennzeichnet, daß eine Klemmeinrichtung (50) vorhanden ist, in die eine oder mehrere Säulen (25) einspannbar sind.

10. Vorrichtung nach einem der Ansprüche 9, dadurch gekennzeichnet, daß die Anschlüsse (26) für die Zu- und/oder Ableitungen (4, 12) für organisches Lösungsmittel an den Enden jeder Säule (25) gegebenenfalls mittels Klemmringen (28) angebrachte Rohrverschlußelemente aufweisen, jedes Rohrverschlußelement eine Durchgangsbohrung (30) aufweist, und die Rohrverschlußelemente in die die Säule tragende Klemmeinrichtung (50) einspannbar sind.

11. Vorrichtung nach Anspruch 9 oder 10, dadurch gekennzeichnet, daß die Klemmeinrichtung (50) eine Stütze (51) aufweist, und der Stütze (51) eine untere Konsole (52) und ein Andruckelement (60, 61, 62, 63) zugeordnet sind, und daß die Säule (25) zwischen unterer Konsole (52) und Andruckelement (60, 61, 62, 63) einspannbar ist.

12. Vorrichtung nach Anspruch 11, dadurch gekennzeichnet, daß das Andruckelement (60, 61, 62, 63) einen auf einen Stutzen (55) einwirkenden Kniehebelmechanismus (60) aufweist, und der Stutzen (55) sowie die untere Konsole (52) Bohrungen (57) aufweisen, an die einerseits die Zu- und/oder Ableitungen (4, 12) für organisches Lösungsmittel und andererseits druckstabile Leitungen (58) angeschlossen sind, die ihrerseits in an den Durchgangsbohrungen (30) der Rohrverschlußelemente vorgesehenen Konen (31) eingreifen, der Kniehebelmechanismus (60) gegebenenfalls mit einer auf den Stutzen (55) einwirkenden Andrückschraube versehen ist, und die Andrückschraube (63) ein Tellerfederpaket zur Längenänderungskompensation der Säule (25) aufweist, und der Stutzen (55) gegebenenfalls in einer an der Stütze (51) über eine obere Konsole (53) befestigten Führungshülse (54 ) geführt und über eine Feder (56) abgestützt ist.
